(19) Europäisches Patentamt

European Patent Office

Office européen des brevets

(11) **EP 0 849 598 A1**

## (12) EUROPÄISCHE PATENTANMELDUNG

(43) Veröffentlichungstag:
24.06.1998 Patentblatt 1998/26

(51) Int. Cl.⁶: $G01P\ 3/489$, $G01P\ 3/66$

(21) Anmeldenummer: 97120600.8

(22) Anmeldetag: 25.11.1997

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 20.12.1996 DE 19653259
07.11.1997 DE 19749307

(71) Anmelder:
Mannesmann VDO Aktiengesellschaft
60388 Frankfurt/M. (DE)

(72) Erfinder:
• Säger, Peter
61381 Friedrichsdorf (DE)
• Landsiedel, Thomas
61449 Steinbach (DE)

(74) Vertreter:
Rassler, Andrea, Dipl.-Phys.
Sodener Strasse 9
65824 Schwalbach (DE)

(54) **Verfahren und Anordnung zur genauen Bestimmung der Geschwindigkeit eines umlaufenden Bauteiles, insbesondere der Radgeschwindigkeit eines Kraftfahrzeuges**

(57) Die Erfindung betrifft ein Verfahren zu genauen Bestimmung der Geschwindigkeit eines umlaufenden Bauteiles, insbesondere der Radgeschwindigkeit eines Kraftfahrzeuges, bei welchem am Umfang des umlaufenden Bauteiles vorhandene Unstetigkeiten berührungslos abgetastet werden, wobei bei der Detektion jeder Unstetigkeit ein elektrischer Impuls erzeugt wird und die Anzahl der so erzeugten Impulse gezählt wird.

Um sicher die Dynamik eines umlaufenden Bauteiles bestimmen zu können, ohne daß Herstellungstoleranzen oder Unrundheiten der Inkrementscheiben diese beeinflussen, wird der Zeitraum bestimmt, in welchem alle Impulse des umlaufenden Bauteiles genau einmal gezählt werden und daraus die Geschwindigkeit des umlaufenden Bauteiles ermittelt wird.

Es is möglich, mehrere aktuelle Geschwindigkeitswerte während einer Umdrehung zu ermitteln, wobei jeder aktuelle Geschwindigkeitswerk aus der Zeit für eine volle Radumdrehung berechnet wird.

Figur 2

## Beschreibung

Die Erfindung betrifft ein Verfahren zur genauen Bestimmung der Geschwindigkeit eines umlaufenden Bauteiles, insbesondere der Radgeschwindigkeit eines Kraftfahrzeuges, bei welchem am Umfang des umlaufenden Bauteiles vorhandene Unstetigkeiten berührungslos abgetastet werden, wobei bei der Detektion jeder Unstetigkeit ein elektrischer Impuls erzeugt wird und die Anzahl der so erzeugten Impulse gezählt wird sowie eine Anordnung zur Durchführung des Verfahrens.

Bekannte Systeme zur Erfassung der Geschwindigkeit bei Kraftfahrzeugen nutzen ein von einem einzigen Geschwindigkeitsgeber geliefertes Signal zur Bestimmung der Fahrzueggeschwindigkeit.

Zu diesem Zweck befinden sich Inkrementscheiben an dem Vorderrad des Kraftfahrzeuges. Der Geschwindigkeitsgeber, z. B. ein Hall-Sensor oder ein Induktivgeber, ist gegenüber einem Fahrzeugrad oder der Antriebswelle des Rades oder am Getriebeabgang der Antriebswelle angeordnet, vorzugsweise am linken Vorderrad, und detektiert die diesem Rad entsprechende Raddrehzahl.

Die Raddrehzahl wird aus dem Signal des Geschwindigkeitsgebers durch Zählen der Signalflanken in einem vorgegebenen Zeitraum berechnet. Dieses der Raddrehzahl entsprechende elektrische Signal wird einem Steuergerät zugeführt, welches aus dem Signal die Geschwindigkeit des Fahrzeuges bestimmt.

Durch Herstellungstoleranzen der Zahnflanken der Inkrementgeber zueinander und auftretender Unrundheiten von Reifen beziehungsweise Felgen ergeben sich bei dieser Art der Auswertung der Raddrehzahlen Schwebungen in den Radgeschwindigkeiten, die zu Ungenauigkeiten führen und die tatsächliche Radgeschwindigkeit verfälschen. Diese Schwebungen werden normalerweise durch Filterung des Signals eliminiert.

Werden die Radgeschwindigkeiten mit der oben beschriebenen Methode zu stark gefiltert, verliert die so bestimmte Radgeschwindigkeit an Dynamik.

Der Erfindung liegt somit die Aufgabe zugrunde ein Verfahren zur genauen Bestimmung der Geschwindigkeit eines umlaufenden Bauteiles anzugeben, bei dem Herstellungstoleranzen der Inkrementscheibe und Unrundheiten des Bauteiles eliminiert und trotzdem zuverlässig die Dynamik des umlaufenden Bauteiles bestimmt werden kann.

Erfindungsgemäß wird ein Zeitraum bestimmt, in welchem die Impulse aller Unstetigkeiten des umlaufenden Bauteiles genau einmal gezählt werden und daraus die Radgeschwindigkeit ermittelt wird.

Vorteilhafterweise wird so die Radgeschwindigkeit aus der Zeit für eine komplette Radumdrehung ermittelt, wodurch Herstellungstoleranzen und Unrundheiten nicht in die Messung eingehen.

Trotz der Eliminierung der Herstellungstoleranzen und Unrundheiten des Bauteiles wird so ein ausreichend dynamisches Signal erhalten.

In einer Ausgestaltung werden die die Unstetigkeiten repräsentierenden Impulse in Gruppen eingeteilt und bei Auftreten des ersten Impulses einer jeden Gruppe eine neue Zeitmessung durch Zählung der Impulse über alle Unstetigkeiten ausgelöst. Dabei sind die die Unstetigkeiten repräsentierenden Impulse in Gruppen gleicher Anzahl zusammengefaßt.

Dies erlaubt insbesondere bei kleinen Geschwindigkeiten eine schnellere Erkennung der Geschwindigkeit. Auch werden Änderungen der Geschwindigkeit so schneller und sicher detektiert.

In einer Weiterbildung wird nach dem Auftreten des Impulses der ersten Unstetigkeit einer jeden Gruppe eine Zeitinformation abgespeichert, nachdem wiederholten Auftreten des Impulses dieser ersten Unstetigkeit einer jeden Gruppe eine zweite Zeitinformation bestimmt, welche mit der ersten Zeitinformation verglichen wird und die Differenz der beiden Zeitinformationen zur Bestimmung der Geschwindigkeit des umlaufenden Bauteiles genutzt wird. Dabei wird beim Auftreten der zweiten Zeitinformation die erste Zeitinformation gelöscht und die zweite Zeitinfomation abgespeichert.

Dadurch werden nur die augenblicklich interessanten Zeitinformationen gespeichert und so ein geringer Bedarf an Speicherkapazität gewährleistet.

Bei einer Anordnung zur Durchführung des Verfahrens ist mindestens zwei Rädern eines Kraftfahrzeuges je ein Inkrementgeber zugeordnet, dem gegenüber je ein Signalsensor angeordnet ist, der das jeweilige der Geschwindigkeit eines Fahrzeugrades entsprechende Signal detektiert, wobei dieser Sensor mit einem Steuergerät verbunden ist und das Steuergerät einen Speicher mit mehreren Registern aufweist, welcher vom Signal eines Zählers steuerbar sind.

In einer Ausführung ist an jedem Fahrzeugrad ist ein Inkrementgeber angeordnet, dem gegenüber jeweils ein mit dem Steuergerät verbundener Sensor angeordnet ist und das Steuergerät aus allen Signalen den Fahrzeugkorridor für eine vorgegebene Zeit bestimmt.

Die Bestimmung der Radgeschwindigkeiten an jedem Rad des Kraftfahrzeuges ist besonders bedeutungsvoll für die Vorausbestimmung von Kurvenfahrten.

Die Erfindung läßt zahlreiche Ausführungsbeispiele zu. Eines davon soll an hand der in der Zeichnung dargestellten Figuren näher erläutert werden.

Es zeigt

Fig. 1: Anordnung zur Bestimmung der Radgeschwindigkeit eines Kraftfahrzeues

Fig. 2: Programmablauf zur Bestimmung der Radgeschwindigkeit

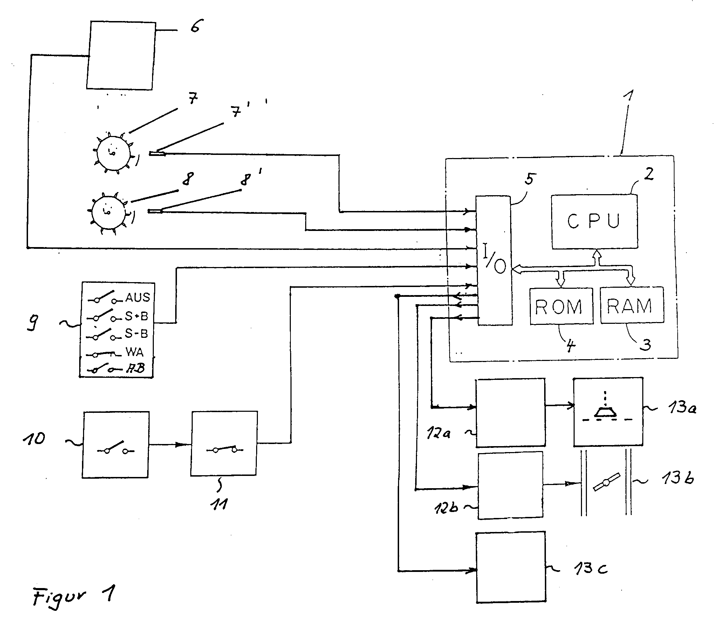

In Figur 1 ist ein automatisches Geschwindigkeits- und Abstandsregelsystem zur Einhaltung des Sicherheitsabstandes von Fahrzeugen untereinander dargestellt, welches an der Stoßstange des Fahrzeuges angeordnet ist. Ein leistungsstarker Mikrorechner 1, bestehend aus einer zentralen Recheneinheit 2, einem Arbeitsspeicher 3, einem Festwertspeicher 4 sowie einer Ein-/Ausgabeeinheit 5 erhält dabei von einem Radar- oder Lasersensor 6 ein Signal, das Informationen über den Abstand zu mindestems einem vorausfahrenden Fahrzeug mißt.

Inkrementscheiben 7 und 8 sind an den jeweils beiden nicht weiter dargestellten Vorderrädern des Kraftfahrzeuges angeordnet und werden hinsichtlich der Drehzahl von Radsensoren 7', 8', die den Inkrementscheiben 7 und 8 gegenüberliegend angeordnet sind, abgetastet. Diese Drehzahlsignale werden ebenfalls über die Ein- und Ausgabeeinheit 5 dem Mikrorechner 1 zugeführt. Die Radsensoren können Induktivgeber oder Hallsensoren sein.

Der Mikroprozessor 1 berechnet aus dem vom Radarsensor 6 gelieferten Signalen (Abstandssignal und Relativgeschwindigkeitssignal) und mit Hilfe der Radgeschwindigkeiten die Geschwindigkeitsdifferenz zwischen beiden Fahrzeugen und ermittelt aus diesem den sicheren Mindestabstand. Wird dieser unterschritten, warnt das System bei aktivierter Warnfunktion den Fahrer.

Ist der Abstandsbetrieb vom Fahrer eingeschaltet, wird der Abstand zum vorausfahrenden Fahrzeug automatisch auf einen wählbaren Abstand engeregelt. Per Tastendruck auf den Bedienschalter 9 wird eine gewünschte Geschwindigkeit und/oder der gewünschte Abstand eingestellt und gespeichert und vom System aufrechterhalten.

Bei Annäherung an ein langsameres Fahrzeug übernimmt der Mikrorechner 1 durch automatisches Schließen der Drosselklappe 13b eine Verringerung der Fahrzeuggeschwindigkeit und regelt so den eingestellten Sollabstand zum vorausfahrenden Fahrzeug, wobei der Sollabstand immer größer/gleich dem gesetzlich vorgegebenen Sicherheitsabstand ist. Neben dem automatischen Schließen der Drosselklappe 13b ist auch eine Einwirkung auf die Bremse 13a und/oder eine Ansteuerung der Getriebesteuerung 13c zur Verringerung der Fahrzeuggeschwindigkeit möglich. Ist die Fahrspur wieder frei, beschleunigt der Abstandsregler das Fahrzeug auf die eingestellte Maximalgeschwindigkeit. Bei einer Fahrzeugvorausfahrt ist immer die Abstandregelung aktiv.

Weiterhin ist der Mikrorechner 1 mit Schaltern der Fahrzeugbremse 10 beziehungsweise der Fahrzeugkupplung 11 verbunden. Werden diese vom Fahrer über das Kupplungs- oder Bremspedal betätigt, bewirken sie im Normalbetrieb ein Abschalten der Regelung.

Im Mikroprozessor bildet eine Regelschaltung den Vergleich zwischen einem Soll- und Istwert eines in Software abgelegten Regelungskonzepts. Ist man im Regelbereich, so wird vom Mikrorechner ein Ausgangssignal ausgegeben, das vom Regelungskonzept ermittelt wird. Die Ansteuerung der Drosselklappe 13b, der Bremse 13a und/oder des Getriebes 13c erfolgt dabei über eine elektrische Endstufe 12.

Aus den von den Drehzahlsensoren 7', 8' erfaßten Drehzahlsignalen ermittelt die im Mikroprozessor 1 gebildete Einrichtung zur Fahrspurbestimmung die Gierrate $\dot{\varphi}$ des Kraftfahrzeuges. Die Gierrate bestimmt sich wie folgt:

$$\dot{\varphi} = \frac{\Delta v_{VR}}{s + v^2 \cdot k}$$

wobei

$\Delta v_{VR}$    die Geschwindigkeitsdifferenz der Vorderräder des Kraftfahrzeuges,

$s$    die Spurbreite zwischen den Vorderrädern,

$v$    die Fahrzeuggeschwindigkeit,

$k$    der Dynamikkorrekturfaktor ist.

Mit Hilfe der so bestimmten Gierrate wird nun die Fahrspur des Kraftfahrzeuges aus dem Kurvenradius

$$R = \frac{v_R}{\dot{\varphi}}$$

berechnet.

Der von jedem Vorderrad gefahrene Radius bestimmt sich aus dem Quotienten der Radgeschwindigkeit $V_R$ dieses Vorderrades durch die Gierrate $\varphi$.

Der Fahrkorridor wird als Funktion der Radien $R_R$ und $R_L$ des rechten und linken Vorderrades gebildet. Die Breite des Fahrkorridors weist mindestens die Spurbreite der Räder auf.

Nachstehend soll die Bestimmung der Geschwindigkeit des Fahrzeuges auf der Grundlage der Detektion der Radgeschwindigkeit erläutert werden: Die Inkrementscheiben 7 und 8, die jeweils an einem Vorderrad des Kraftfahrzeuges angeordnet sind, weisen beispielsweise eine gerade Anzahl von Unstetigkeiten auf. Bei der Drehung der Inkrementscheibe 7 bzw. 8 bewegen sich die Unstetigkeiten in einem vorgegebenen Abstand so an dem Hall-Sensor 7' bzw. 8' vorbei, daß der Magnetfluß zwischen der Scheibe 7 bzw. 8 und dem Sensor 7' bzw. 8' verändert wird. Das Ausgangssignal jedes Hall-Sensors 7' bzw. 8' ist eine Impulsreihe, wobei die Vorderflanke beziehungsweise die Rückflanke der Impulse gezählt werden. Die Unstetigkeiten der Inkrementscheibe 7 bzw. 8 bilden dabei Gruppen, wobei jeder Gruppe eine gleiche Anzahl von Unstetigkeiten zugeordnet ist.

Bei beispielsweise 50 Unstetigkeiten n weist jede Gruppe beispielsweise fünf Unstetigkeiten auf.

Ein Zeitgeber, vorzugsweise der mit Mikroprozessor 1 enthaltene Schwingquarz, liefert ein aktuelles Zeitsignal.

Mittels der vom Radsensor 7 in Abhängigkeit von den Unstetigkeiten erzeugten Impulse n werden in Abhängigkeit von der Vorderflanke des jeweiligen Impulses die aktuellen Zeitsignale in den Arbeitsspeicher 3 eingetragen. Der Arbeitsspeicher 3 des Mikroprozessor 1 weist so viele Registerplätze i auf, wie Gruppen i von Unstetigkeiten gewählt wurden. Um die Speicherkapazität des Arbeitsspeichers 3 besser nutzen zu können, kann die Frequenz des Schwingquarzes heruntergeteilt werden.

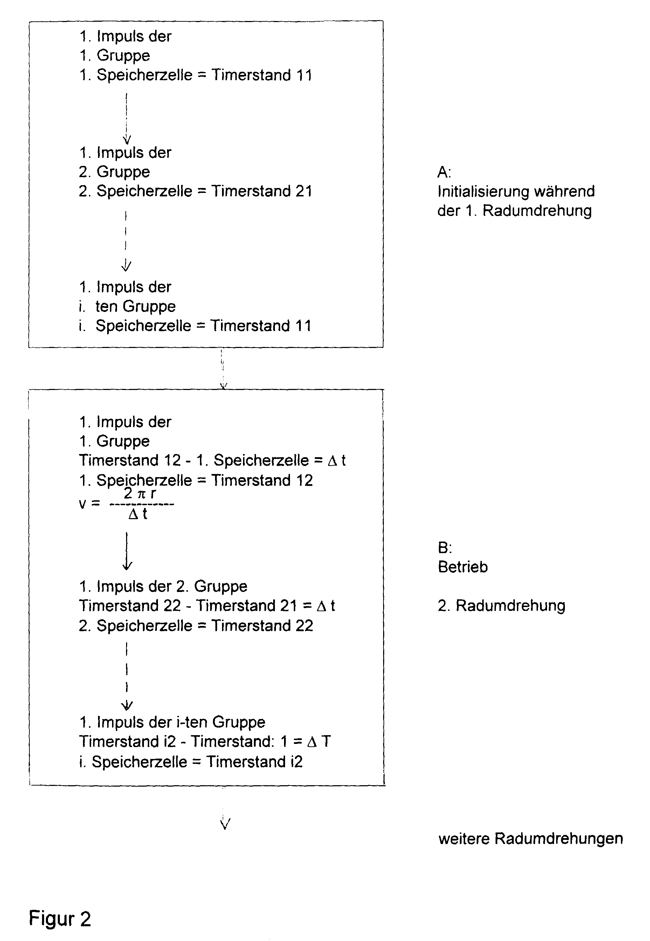

Anhand von Figur 2 soll das erfindungsgemäße Verfahren zur Bestimmung der Radgeschwindigkeit näher erläutert werden.

In einer Initialisierungsphase 1, die während der ersten Radumdrehung stattfindet, wird nach Auftreten des ersten Impulses der ersten Gruppe an Unstetigkeiten der aktuelle Stand 1 des Timers in das erste Register des Speichers 4 des Mikroprozessors eingetragen. Beim Auftreten des ersten Impulses der zweiten Gruppe von Unstetigkeiten wird der zu diesem Zeitpunkt aktuelle Timerstand 2 im zweiten Register des Speichers 4 abgelegt.

Dies erfolgt analog für jeden ersten Impuls der jeweiligen Gruppe. Beim ersten Impuls der i-ten Gruppe wird der aktuelle Timerstand i im i-ten Register des Speichers 4 abgespeichert. Die Initailisierung ist nach einer Radumdrehung abgeschlossen.

Während des normalen Betriebszustandes 3, welcher sich an die erste Radumdrehung anschließt, wird die Radgeschwindigkeit wie folgt bestimmt.

Beim Auftreten des Impulses der ersten Gruppe von Unstetigkeiten wird in der zweiten Radumdrehung zu diesem Zeitpunkt der abgespeicherte Timerstand 1 von dem zu diesem Zeitpunkt aktuellen Timerstand abgezogen und mit Hilfe dieser Differenz $\Delta$ t die Radgeschwindigkeit v ermittelt.

$$v = \frac{2\pi r}{\Delta t}$$

wobei r den Radius des Rades darstellt.

Der Timerstand 11 wird gelöscht und der aktuelle Timerstand 12 in das erste Register des Speichers eingetragen.

Beim Anliegen des ersten Impulses der zweiten Gruppe von Unstetigkeiten wird der abgespeicherte Timerstand 21 vom aktuellen Timerstand 22 abgezogen und wie beschrieben mit Hilfe dieser Differenz die augenblickliche Radgeschwindigkeit bestimmt. Der Timerstand 21 wird durch den Timerstand 22 überschrieben.

Dies erfolgt für jeden ersten Impuls jeder weiteren Gruppe von Unstetigkeiten bis die zweite Radumdrehung abgeschlossen ist.

Die beschriebene Differenzbildung erfolgt nun alle fünf Impulse durch Vergleich der jeweils aktuell anliegenden Timerstandes mit der in dem jeweiligen Register gespeicherten Timerstandes. Durch diese Verfahrensweise ist die Bestimmung der Radgeschwindigkeit sehr schnell möglich.

Die erläuterte Verfahrensweise wiederholt sich bei jeder Radumdrehung, wobei immer der von der vorhergehenden Radumdrehung abgespeicherte Timerstand von dem aktuell anliegenden Timerstand jeder Gruppe abgezogen wird.

**Patentansprüche**

1. Verfahren zur genauen Bestimmung der Geschwindigkeit eines umlaufenden Bauteiles, insbesondere der Radgeschwindigkeit eines Kraftfahrzeuges, bei welchem am Umfang des umlaufenden Bauteiles vorhandene Unstetigkeiten berührungslos abgetastet werden, wobei bei der Detektion jeder Unstetigkeit ein elektrischer Impuls erzeugt wird und die Anzahl der so erzeugten Impulse gezählt wird, **dadurch gekennzeichnet**, daß ein Zeitraum bestimmt wird, in welchem die Impulse aller Unstetigkeiten des umlaufenden Bauteiles genau einmal gezählt werden und daraus die Geschwindigkeit des umlaufenden Bauteiles ermittelt wird.

2. Verfahren nach Anspruch 1, **dadurch gekennzeichnet**, daß die die Unstetigkeiten repräsentierenden Impulse in Gruppen eingeteilt werden und bei Auftreten des ersten Impulses einer jeden Gruppe eine neue Zeitmessung durch Zählung der Impulse über alle Unstetigkeiten ausgelöst wird.

3. Verfahren nach Anspruch 2, **dadurch gekennzeichnet**, daß die die Unstetigkeiten repräsentierenden Impulse in Gruppen gleicher Anzahl zusammengefaßt sind.

4. Verfahren nach einem der vorhergehenden Ansprüche, **dadurch gekennzeichnet**, daß nach dem Auftreten des Impulses der ersten Unstetigkeit einer jeden Gruppe eine Zeitinformation abgespeichert wird, nach dem wiederholten Auftreten des Impulses dieser ersten Unstetigkeit einer jeden Gruppe eine zweite Zeitinformation bestimmt wird, welche mit der ersten Zeitinformation verglichen wird und die Differenz der beiden Zeitinformationen zur Bestimmung der Geschwindigkeit des umlaufenden Bauteiles genutzt wird.

5. Verfahren nach Anspruch 4, **dadurch gekennzeichnet**, daß bei Auftreten der zweiten Zeitinformation die erste Zeitinformation gelöscht und die zweite Zeitinformation gespeichert wird.

6. Anordnung zur Durchführung des Verfahrens nach Anspruch 1, **dadurch gekennzeichnet**, daß mindestens zwei Rädern des Kraftfahrzeuges je ein Inkrementgeber zugeordnet ist, und jedem Inkrementgeber ein Sensor gegenüberliegt, der das jeweilige der Geschwindigkeit des Rades entsprechende Signal detektiert und dieser Sensor mit dem Steuergerät eines Kraftfahrzeuges verbunden ist und das Steuergerät einen Speicher mit mehreren Registern aufweist, welcher vom Signal eines Zählers steuerbar ist.

7. Anordnung nach Anspruch 6, **dadurch gekennzeichnet**, daß an jedem Fahrzeugrad ein Inkrementalgeber angeordnet ist, dem gegenüber jeweils ein mit dem Steuergerät verbundener Sensor angeordnet ist und das Steuergerät die Radgeschwindigkeiten für alle Räder bestimmt.

8. Anordnung nach einem der vorhergehenden Ansprüche, **dadurch gekennzeichnet**, daß die Sensoren Hall-Sensoren sind.

9. Anordnung nach einem der vorgegebenen Ansprüche 8 oder 9, **dadurch gekennzeichnet**, daß als Sensoren an sich im Fahrzeug vorhandene ABS-Sensoren verwendet werden.

6

ROM
RAM
CPU
I/O

AUS
S+B
S-B
WA
RB

6
7
7''
8
8'
1
5
2
4
3
9
10
11
12a
12b
13a
13b
13c

Figur 1

1. Impuls der
1. Gruppe
1. Speicherzelle = Timerstand 11

↓

1. Impuls der
2. Gruppe
2. Speicherzelle = Timerstand 21

↓

1. Impuls der
i. ten Gruppe
i. Speicherzelle = Timerstand 11

A:
Initialisierung während
der 1. Radumdrehung

1. Impuls der
1. Gruppe
Timerstand 12 - 1. Speicherzelle = $\Delta t$
1. Speicherzelle = Timerstand 12
$$v = \frac{2 \pi r}{\Delta t}$$

↓

1. Impuls der 2. Gruppe
Timerstand 22 - Timerstand 21 = $\Delta t$
2. Speicherzelle = Timerstand 22

↓

1. Impuls der i-ten Gruppe
Timerstand i2 - Timerstand: 1 = $\Delta T$
i. Speicherzelle = Timerstand i2

B:
Betrieb

2. Radumdrehung

↓

weitere Radumdrehungen

Figur 2

**EUROPÄISCHER RECHERCHENBERICHT**

Nummer der Anmeldung

EP 97 12 0600

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 35 06 233 A (VOLKSWAGENWERK AG) 31.Oktober 1985 * Ansprüche 1,3-8; Abbildung 3 * --- | 1-9 | G01P3/489 G01P3/66 |
| X | EP 0 270 313 A (WOODWARD GOVERNOR CO) 8.Juni 1988 * Seite 18 - Seite 22; Ansprüche 1,9; Abbildung 4 * --- | 1-9 | |
| X | US 4 569 027 A (NAKANO JIRO  ET AL) 4.Februar 1986 * Zusammenfassung; Abbildungen 1-8 * --- | 1-9 | |
| A | US 4 763 261 A (IMANAKA ASAJI  ET AL) 9.August 1988 * Zusammenfassung * ----- | 1 | |

|  |
|---|
| RECHERCHIERTE SACHGEBIETE (Int.Cl.6) |
| G01P |

Der vorliegende Recherchenbericht wurde für alle Patentansprüche erstellt

| Recherchenort | Abschlußdatum der Recherche | Prüfer |
|---|---|---|
| MÜNCHEN | 27.März 1998 | Felicetti, C |

EPO FORM 1503 03.82 (P04C03)